# EUROPÄISCHE PATENTANMELDUNG

(11) **EP 1 032 113 A1**
(43) Veröffentlichungstag der Anmeldung: **30.08.2000**
(21) Anmeldenummer: 00103785.2
(22) Anmeldetag: 23.02.2000
(51) Int. Cl.: H02K 9/16, H02K 9/18

(54) **Kühlung für eine Elektromaschine, insbesondere Drehfeldmaschine**

(30) Priorität: 25.02.1999 DE 19908228; 13.04.1999 DE 19916561; 27.04.1999 DE 19919040
(71) Anmelder: LLOYD DYNAMOWERKE GMBH, 28207 Bremen (DE)
(72) Erfinder: Beneke, Helmuth, 28857 Syke (DE)
(74) Vertreter: von Ahsen, Erwin-Detlef, Dipl.-Ing.

(57) **Zusammenfassung**

Die erfindungsgemäße Elektromaschine weist einen Ständer (13) und einen Läufer auf. Im Ständer (13) und im Läufer sind Ständerkanäle (24) bzw. Läuferkanäle (25) angeordnet. Ein Kühlmedium nimmt im Bereich der Läuferkanäle (25) Wärme aus dem Läufer auf und gibt sie im Bereich der Ständerkanäle (24) an den Ständer (13) ab.

Die erfindungsgemäße Elektromaschine eignet sich insbesondere als Synchrongenerator für große Windenergieanlagen im Offshore-Bereich.

## Beschreibung

Die Erfindung betrifft eine Elektromaschine, insbesondere eine Drehstrommaschine mit einem Ständer und einem Läufer sowie Kühlmittelkanälen für ein Kühlmedium, beispielsweise einem Gas, insbesondere Luft, zum Kühlen von Ständer und Läufer.

Eine solche Elektromaschine ist beispielsweise aus der DE 35 28 347 A1 bekannt. Bei dieser Elektromaschine werden Ständer und Läufer im Luftspalt durch vakuumdicht eingeschweißte Spaltrohre voneinander getrennt. Zwischen die beiden Spaltrohre wird eine Kühlflüssigkeit geleitet, die die Verlustleistung der Maschine sowohl vom Ständer als auch vom Läufer aufnimmt. Der Spalt zwischen Ständer und Läufer ist somit der Kühlmittelkanal für das Kühlmedium. Nachteilig bei dieser Elektromaschine ist, daß die Wickelköpfe der Wicklungen von Ständer und Läufer nicht getrennt gekühlt werden. Sie müssen ihre Wärme längs der Wicklung in die Blechpakete von Ständer bzw. Läufer abgeben.

Die AT 56 937 oder GB 490 062 offenbaren Gleichstrommaschinen, bei denen der Ständer und der Kühler durch ein Kühlmedium, nämlich Luft, gekühlt werden. Die Luft wird durch Kühlkanäle im Ständer und Läufer geführt und nimmt dabei die Verlustwärme aus dem Läufer und dem Ständer auf. Nachdem die Kühlluft die Wärme vom Ständer und Läufer aufgenommen hat, wird sie durch gesondete Kühler gekühlt und wieder zum Kühlen vom Ständer und Läufer zur Verfügung gestellt.

Weiterhin ist durch die DE-GM 1 813 190 eine Elektromaschine bekannt geworden, bei der der Läufer Kühlkanäle aufweist und durch Kühlluft gekühlt wird. Die Kühlluft wird Außen am Stator, und zwar an einem den Stator ringartig umschließenden Innenmantel vorbeigeführt. Der Innenmantel weist Kühlrohrschlangen auf, durch die ein flüssiges Kühlmedium hindurch geführt wird. Durch den Innenmantel kühlt somit zum einen durch Festkörper-Wärmeübertragung den Stator im inneren des Innenmantels und zum anderen die Kühlluft aus dem Läufer im Ringkanal außen am Innenmantel.

Aus der WO 89 00 784 A1 (entsprechend EP 0 329 790 A1) ist eine Elektromaschine bekannt, bei der zu beiden Stirnseiten von Läufer und Ständer eine Kühlflüssigkeit eingeleitet, an den Stirnseiten vorbeigeführt und auf der diametral gegenüberliegenden Seite wieder abgeleitet wird. Es sind somit zwei Kühlkanäle, nämlich jeweils einer auf einer Stirnseite vorhanden. Gekühlt werden hier nur die Wickelköpfe. Der Läufer verfügt über keine gesonderte Kühlung. Der Ständer wird über einen gesonderten, die Ständerblechpakete umgebenden Gehäusemantel flüssigkeitsgekühlt. Diese Elektromaschine ist insbesondere für den Einsatz als Spindelantrieb in Zerspanungsmaschinen gedacht, bei der Wärmeeinleitungen in das Gehäuse der Zerspanungsmaschine vermieden werden müssen. Diese würden sonst nämlich zu Toleranzverschiebungen an den zu bearbeitenden Werkstücken führen.

Darüber hinaus sind noch unterschiedliche Ausführungen von flüssigkeitsgekühlten Elektromaschinen bekannt, bei dem eine Kühlflüssigkeit durch eine Hohlwelle für den Läufer geführt wird. So befaßt sich zum Beispiel die WO 90 11 640 A1 mit der verbesserten Gestaltung der Hohlwelle und einer Ölförderspindel eines hochtourigen, 4-poligen Synchrongenerators für das Bordnetz von Flugzeugen. Ebenso betrifft auch die EP 0 688 090 A1 die Gestaltung einer ölgekühlten Hohlwelle am Beispiel eines Asynchronmotors mit flüssigkeitsgekühlten Gehäusemantel für einen Traktionsantrieb.

All den vorgenannten Ausführungen ist gemeinsam, daß sie einen erhöhten technischen Aufwand nach sich ziehen. Dieses erhöht nicht nur die Herstellungskosten, sondern zieht auch Wartungsaufwand nach sich.

Der Erfindung liegt das Problem zugrunde, eine Elektromaschine zu schaffen, die sich durch einen kompakten Aufbau mit geringem Volumen und hohe Schutzart auszeichnet sowie ohne wartungsintensive Komponenten auskommt.

Zur Lösung dieses Problems ist die erfindungsgemäße Elektromaschine dadurch gekennzeichnet, daß im Ständer Ständerkanäle und im Läufer Läuferkanäle als Teil eines Kühlkreislaufs angeordnet sind, wobei das Kühlmedium im Bereich der Läuferkanäle Wärme aus dem Läufer aufnimmt und im Bereich der Ständerkanäle an den Ständer abgibt.

Bei Drehstrommaschinen in der Ausführungsform als Synchronmaschine mit Schenkelpolläufer werden die Läuferkanäle durch Pollücken gebildet. In den Ausführungsformen als Synchronmaschine mit Vollpolläufer oder als Asynchronmaschine werden die Läuferkanäle durch in die Läuferbleche des Läuferblechpakets eingestanzte Kühlluftkanäle gebildet.

Erfindungsgemäß ist somit ein innerer Kühlkreislauf in der Elektromaschine gegeben. Die Wärme wird von dem Kühlmedium vom Läufer übernommen und an den kühleren Ständer abgegeben. Von hier wird die Läuferwärme zusammen mit der Ständerwärme nach außen geführt. Gesonderte Kühler für das Kühlmedium, wie bei der AT 56 937 oder GB 490 062 sind nicht erforderlich. Der geschlossene Kühlkreislauf weist gegenüber durchzugsgekühlten Maschinen zudem den Vorteil auf, daß ein vergleichsweise geringes Volumen des Kühlmediums und weniger Trennfugen gegeben sind. Dieses ist insbesondere dann von Vorteil, wenn die Elektromaschine in explosionsgefährdeter Umgebung, beispielsweise auf Ölbohrplattformen, gekapselt oder vor Inbetriebnahme mit Luft gespült werden muß. Auch bei gekapselten Elektromaschinen für den Einsatz unter aggressiven Umgebungsbedingungen, beispielsweise im Offshore-Bereich, ist dies aufgrund des geringen Kühlmediumvolumens von Vorteil. Als Kühlmedium wird vorzugsweise ein Gas, insbesondere Luft, verwendet. Gase sind elektrisch nicht leitend und erfordern keine besonderen Abdichtungsmaßnahmen der bewegten Teile. Der konstruktive Aufwand läßt sich somit weiter verringern.

Vorzugsweise ist der Kühlkreislauf aus den Ständerkanälen, den Läuferkanälen und Hohlräumen im Bereich von Ständerwickelköpfen, also an den Stirnseiten des Ständers, gebildet. Die Ständerwickelköpfe bilden häufig einen besonders wärmebelasteten Bereich der Elektromaschine dar. Diese werden ebenfalls durch das Kühlmedium gekühlt und die Verlustwärme an den Ständer abgegeben.

Nach einer Weiterbildung der Erfindung ist der Ständer der Elektromaschine mit einem Ständergehäuse versehen. Dieses weist seinerseits Kühlkanäle für ein zweites Kühlmedium auf. Dieses Kühlmedium ist vorzugsweise eine Kühlflüssigkeit, beispielsweise Wasser. Die vom Läufer und den Ständerwickelköpfen in den Ständer eingeleitete Wärme wird in diesem Fall vom Ständer an das Ständergehäuse übergeben und von hier durch die Kühlflüssigkeit aufgenommen.

Weitere Merkmale der Erfindung beziehen sich auf konstruktive Einzelheiten der Elektromaschine.

Die Erfindung wird nachfolgend anhand eines in der Zeichnung näher dargestellten Ausführungsbeispiels erläutert. In der Zeichnung zeigen:
- Fig. 1: Ein erstes Ausführungsbeispiel einer Elektromaschine mit den Erfindungsmerkmalen im Längsschnitt,
- Fig. 2: einen Aktivteil einer Elektromaschine nach Fig. 1 im Querschnitt,
- Fig. 3: ein weiteres Ausführungsbeispiel einer Elektromaschine mit den Erfindungsmerkmalen im Längsschnitt,
- Fig. 4: einen Aktivteil einer Elektromaschine nach Fig. 3 im Querschnitt

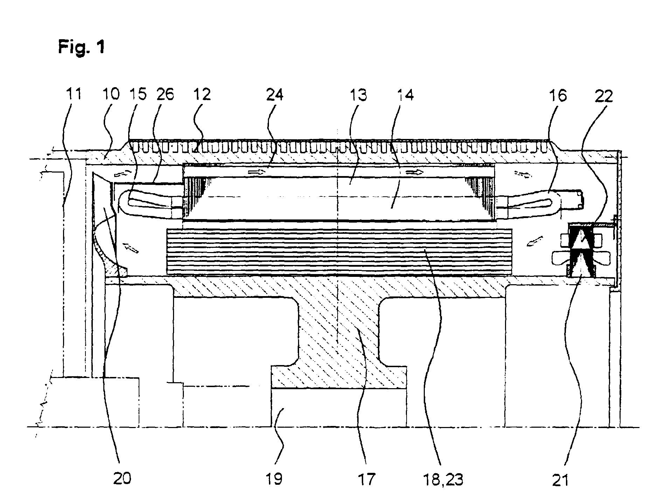

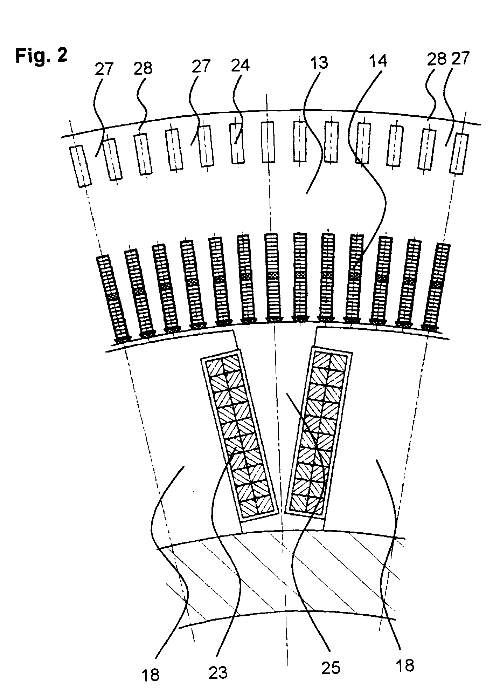

Die in den Fig. 1 und 2 gezeigte Elektromaschine ist ein 16-poliger Synchrongenerator für eine größere Windenergieanlage, die im Offshore-Bereich aufgestellt werden soll.

Ein Ständergehäuse 10 wird direkt an ein Getriebegehäuse 11 angeflanscht. Am äußeren Umfang des Ständergehäuses 10 sind Nuten 12 in Form eines mehrgängigen Gewindes angeordnet. Diese Nuten 12 bilden Kühlkanäle für eine Flüssigkeitskühlung des Ständergehäuses 10. Im Ständergehäuse 10 ist ferner das den Ständer 13 bildende Ständerblechpaket mit der Ständerwicklung 14 und den beiden Wickelköpfen 15 und 16 untergebracht.

Der Läuferkörper 17 mit den darauf angeordneten Erregerpolen 18 ist auf einem Wellenzapfen 19 gelagert. Ferner trägt der Läuferkörper 17 ein Lüfterrad 20 und einen Läufer 21 der Erregermaschine .Ein Ständer 22 der Erregermaschine ist am Gehäuse befestigt. Der in Fig. 2 erkennbare Aktivteil des Synchrongenerators, der hier mit einer Polteilung als Ausschnitt gezeigt ist, läßt das Ständerblechpaket 13 mit der in Nuten untergebrachten Ständerwicklung 14 erkennen. Weiterhin erkennt man den Läuferkörper 17 mit je zwei Hälften der Erregerpole 18 und zugehörige Erregerwicklungen 23.

Das Lüfterrad 20 treibt einen Luftstrom durch im Ständer 13 angeordnete Ständerkanäle 24 und durch Läuferkanäle. Die Ständerkanäle 24 sind in die einzelnen Bleche des Ständerblechpakets 13 eingestanzt. Die Läuferkanäle sind dabei durch Pollücken 25 zwischen den einzelnen Erregerpolen 18 gebildet, wie dies in Fig. 2 gut zu erkennen ist.

Der lüfterseitige Ständerwickelkopf 15 wird durch eine Luftblende 26 abgedeckt, um einen direkten Luftkurzschluß am Lüfterrad 20 zu vermeiden. Die Kühlluft durchströmt den Ständerwickelkopf 16 und die Pollücken 25 und gibt die hier aufgenommene Wärmemenge an die Oberfläche der Ständerkanäle 24 wieder ab. Von hier wird die Wärmemenge zusammen mit der Wärmemenge aus dem Ständerblechpaket 13 an dem flüssigkeitsgekühlten Gehäusemantel, also das Ständergehäuse 10, weitergeleitet.

Zur Kühlung der lüfterseitigen Ständerwickelköpfe 15 erhält die Luftblende 26 am Umfang fein verteilte kleine Bypaß-Öffnungen. Dadurch steht ein zweiter kleiner Kühlkreislauf durch die Ständerwickelköpfe 15 und das Lüfterrad 20, dessen geringen Luftmenge sich vor dem Lüfterrad 20 mit Hauptmenge vermischt.

Die Ständerkanäle 24 werden bezüglich Gesamtquerschnitt und Gesamtoberfläche auf die aus den Ständerwickelköpfen 15 und 16 und der Erregerwicklung 23 abzuführenden Wärmemenge abgestimmt. Die Strömungsgeschwindigkeiten der Kühlluft an den Oberflächen der zu kühlenden Wicklungsteile und an den Wänden der Ständerkanäle 24 werden so hoch eingestellt, daß eine turbulente Strömung sichergestellt ist. Daneben dürfen Stege 27 zwischen den Ständerkanälen 24 nicht so schmal gehalten werden, um die Abfuhr der Verlustleistung aus dem Ständerblechpaket 13 nicht zu sehr zu behindern.

Die Ständerkanäle 24 bilden einen Lochkranz, dessen Innendurchmesser als magnetischer Jochaußendurchmesser anzusehen ist. Das heißt, die magnetischen Feldlinien des Drehfeldes können sich praktisch nicht weiter ausdehnen. Im Vergleich zu den Maschinen mit klassischer Durchzugsbelüftung oder mit herkömmlichen flüssigkeitsgekühlten Gehäusemanteln muß hier der Außendurchmesser des Ständerblechpakets 13 heraufgesetzt werden. Bei hochpoligen Drehstrommaschinen ist der erforderliche Zuwachs an Außendurchmesser aber sehr klein, da die Jochbreite und damit der Außendurchmesser nach der mechanischen Festigkeit bemessen wird und bei herkömmlichen Maschinen oft magnetisch überdimensioniert ist. Der Lochkranz der Ständerkanäle 24 vermindert die mechanische Festigkeit aber nur geringfügig, solange ein ausreichender Quersteg 28 an der Außenseite der Ständerkanäle 24 am Außendurchmesser verbleibt.

Alternativ können die Querstege 28 auch weggelassen werden und die Ständerkanäle 24 als Nuten ausgebildet werden. In diesem Fall würde der Kühlluftstrom direkt am Ständergehäuse 10 entlang geführt werden, was die Wärmeabgabe verbessern würde. Aufgrund der vorgenannten Herabsetzung der mechanischen Festigkeit durch diese Maßnahme sollte jedoch auf die gezeigten Querstege 28 nicht verzichtet werden.

Der insoweit beschriebene Synchrongenerator weist gegenüber den gängigen Maschinen mehrere Vorteile auf, nämlich gegenüber Maschinen mit Durchzugsbelüftung:
Der Aufbau der Maschine mit dem flüssigkeitsgekühlten Gehäusemantel als im Gehäuse integrierten Kühler ist sehr kompakt (kleineres Volumen, geringeres Gewicht) und bietet besonders dann Vorteile, wenn Arbeitsmaschine und Drehstrommaschine direkt gekuppelt und miteinander verflanscht werden sollen und / oder wenn der Raumbedarf für einen herkömmlichen, aufgebauten Luft-Wasser-Wärmetauscher am Aufstellungsplatz nicht gegeben ist.
Die höheren Schutzarten über IP 44 sind ohne Zusatzaufwand realisierbar.
Das eingeschlossene Luftvolumen ist deutlich kleiner, und es sind weniger Trennfugen vorhanden. Das ist besonders vorteilhaft, wenn bei einer Aufstellung der Maschine in aggressiver Atmosphäre wie z.B. salzhaltiger Seeluft oder in explosionsgefährdeten Bereichen wie z.B. auf Bohrplatfformen die Maschine unter Überdruck gehalten werden muß oder vor dem Einschalten mit Frischluft gespült werden muß.
Das Ständerblechpaket kann ohne radiale Kühlkanäle (Kühlschlitze) ausgeführt werden, d.h. die aufwendigen Kanalbleche mit den Abstandsstegen werden nicht benötigt, sondern es werden die Kanäle durch Ständerbleche aufgefüllt. Dadurch sinkt die magnetische Belastung, und die Fertigungskosten fallen trotz des höheren Blecheinsatzes ebenfalls niedriger aus.
Das Blechpaket wird auf seiner gesamten axialen Länge über Festkörperleitung gleichmäßig gekühlt.

Gegenüber Maschinen mit herkömmlichen flüssigkeitsgekühlten Gehäusemänteln verfügt die erfindungsgemäße Maschine über folgende Vorteile:
Die Kühleinrichtung für den Läufer vermeidet den enormen technischen Aufwand, der für die Flüssigkeitskühlung erforderlich ist. Das senkt die Herstellkosten. Außerdem ist die Kühleinrichtung im Gegensatz zur Flüssigkeitskühlung völlig wartungsfrei.
Die Kühleinrichtung für den Läufer ist außerdem so ausgebildet, daß gleichzeitig die Ständerwickelköpfe gekühlt werden. Dadurch wird der Temperaturanstieg in der Ständerwicklung vom Nutbereich zum Wickelkopf hin vermieden, und aufgrund der gleichmäßigeren Erwärmung der Wicklung kann die Maschine höher ausgenutzt werden.

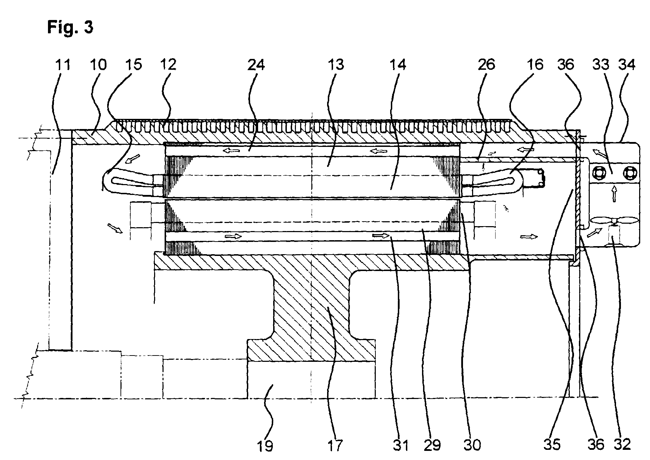

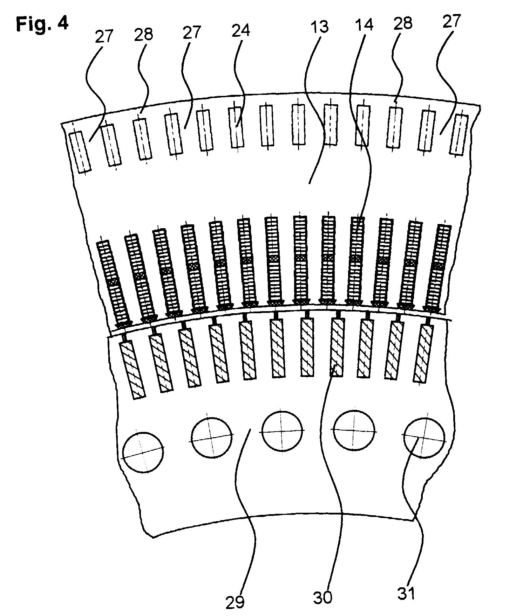

Eine alternative Ausführungsform einer Elektromaschine zeigen die Fig. 3 und 4., nämlich eine Asynchronmaschine mit Kurzschlußläufer. Die Asynchronmaschine gemäß Fig. 3 und 4 stimmt im wesentlichen mit der Synchronmaschine mit Schenkelpolläufer gemäß der Fig. 1 und 2 überein, so daß gleiche Bauteile bzw. Bauteile mit denselben Bezugsziffern beziffert sind. Wesentlicher Unterschied ist jedoch, daß der (Kurzschluß-) Läufer der Asynchronmaschine keine Pollücken aufweist. In die einzelnen Bleche des Läuferblechpakets 29 sind deshalb Bohrungen für Kühlluftkanäle 31 eingestanzt. Diese werden von dem Kühlmedium durchströmt.

Die Elektromaschine gemäß Fig. 3 und 4 zeigt eine weitere Besonderheit, die auch im Zusammenhang mit einer Synchronmaschine mit Schenkelpol-Läufer gemäß der Fig. 1 und 2 eingesetzt werden kann. Die Besonderheit besteht darin, daß ein gesonderter Lüfter 32 vorgesehen ist. Dieses ist immer dann zweckmäßig, wenn bei kleinen Drehzahlen das Lüfterrad 20 keinen ausreichend hohen Druck erzeugt, um turbulente Strömungen in den Kanälen 24, 25/31 sicherzustellen. Einen solche turbulente Strömung wird dann durch das separate Kühlluftgebläse 32 mit eigenem Antriebsmotor sichergestellt.

Eine weitere Steigerung der Ausnutzung der Maschine ist möglich, wenn die Ständerkanäle 24 anders als bisher dimensioniert werden, und zwar stärker als Rückführung der Innenluft und weniger stark als Wärmetauscher. Das erreicht man z.B. durch eine kleinere Anzahl von Ständerkanälen 24 mit größeren Einzelquerschnitten. Der größere hydraulische Radius der größeren Kanäle führt zu einem kleineren Strömungswiderstand der Ständerkanäle 24, und die pro Zeiteinheit geförderte Innenluftmenge (m³/s) steigt. Damit steigt auch die Luftgeschwindigkeit an der Oberfläche der Läuferkanäle 25, 31, was die Kühlung der Läuferwicklung 23, 30 verbessert. Zur Kompensation der verminderten Wärmetauscherkapazität der Ständerkanäle 24 wird ein zusätzlicher Wärmetauscher 33 vorgesehen. Der Wärmetauscher liegt strömungstechnisch in Reihe zu den Ständerkanälen 24 und kühlungstechnisch parallel zu den Ständerkanälen 24.

Das Kühlluftgebläse 32 und der Wärmetauscher 33 sind bei dem Ausführungsbeispiel gemäß Fig. 3 in einem gesonderten Gehäuse 34 angeordnet, welches auf ein Stirnblech 35 am Ständergehäuse 10 angeflanscht ist. Das Stirnblech 35 weist Durchgangsbohrungen 36 auf, durch die die Kühlluft von der eigentlichen Elektromaschine in das Gehäuse 34 strömen kann. Das Lüfterblech 26 ist im vorliegenden Fall bis an das Stirnblech 35 herangeführt, so daß ein Kühlluftkreislauf vom Gehäuse 34 über die Ständerkanäle 24 und die Kühlluftkanäle 31 (bzw. die Pollücken 25, falls eine Synchronmaschine mit Schenkelpolläufer verwendet wird) gewährleistet ist, ohne daß Falschluft gezogen wird.

### Bezugszeichenliste:

- 10: Ständergehäuse
- 11: Getriebegehäuse
- 12: Nuten
- 13: Ständerblechpaket
- 14: Ständerwicklung
- 15: Wickelkopf
- 16: Wickelkopf
- 17: Läuferkörper
- 18: Erregerpol
- 19: Wellenzapfen
- 20: Lüfterrad
- 21: Läufer einer Erregermaschine
- 22: Ständer einer Erregermaschine
- 23: Erregerwicklung
- 24: Ständerkanäle
- 25: Pollücke
- 26: Luftblende
- 27: Steg
- 28: Quersteg
- 29: Läuferblechpaket
- 30: Läuferwicklung
- 31: Kühlluftkanal
- 32: Kühlluftgebläse
- 33: Wärmetauscher
- 34: Gehäuse
- 35: Stirnblech
- 36: Bohrungen

## Patentansprüche

1. Elektromaschine, insbesondere Drehstrommaschine, mit einem Ständer (13) und einem Läufer sowie Kühlmittelkanälen für ein Kühlmedium, beispielsweise einem Gas, insbesondere Luft, zum Kühlen von Ständer (13) und Läufer, **dadurch gekennzeichnet**, daß im Ständer (13) Ständerkanäle (24) und im Läufer Läuferkanäle (25, 31) als Teil eines Kühlkreislaufs angeordnet sind, wobei das Kühlmedium im Bereich der Läuferkanäle (25, 31) Wärme aus dem Läufer aufnimmt und im Bereich der Ständerkanäle (24) an den Ständer (13) abgibt.

2. Elektromaschine nach Anspruch 1, dadurch gekennzeichnet, daß der Kühlkreislauf aus den Ständerkanälen (24), den Läuferkanälen (25, 31) und Hohlräumen im Bereich von Ständerwickelköpfen (15, 16) gebildet ist.

3. Elektromaschine nach Anspruch 1 oder 2, dadurch gekennzeichnet, daß ein Lüfter (20) für das Kühlmedium auf einem Wellenzapfen (19) oder einem Läuferkörper (17) angeordnet ist.

4. Elektromaschine nach Anspruch 1 oder 2, dadurch gekennzeichnet, daß ein gesondertes Kühlluftgebläse (32) mit eigenem Antrieb für das Kühlmedium vorgesehen ist.

5. Elektromaschine nach einem der Ansprüche 1 bis 4, dadurch gekennzeichnet, daß die Läuferkanäle durch Pollücken (25) zwischen Erregerpolen (18) des Läufers oder durch Kühlluftkanäle (31) im Läuferblechpaket (29), insbesondere Ausstanzungen in den einzelnen Blechen des Läuferblechpakets (29), gebildet sind.

6. Elektromaschine nach einem der Ansprüche 1 bis 5, dadurch gekennzeichnet, daß die Ständerkanäle (24) Rippen aufweisen.

7. Elektromaschine nach einem der Ansprüche 1 bis 6, dadurch gekennzeichnet, daß die Ständerkanäle (24) als Ausnehmungen im Ständer (13), insbesondere Ausstanzungen in einzelnen Blechen eines den Ständer (13) bildenden Ständerblechpakets, mit einem die Ständerkanäle (13) begrenzenden Steg am Außenumfang des Ständers (13) ausgebildet sind.

8. Elektromaschine nach einem der Ansprüche 1 bis 7, dadurch gekennzeichnet, daß der Ständer von einem Ständergehäuse (10) umgeben ist, wobei das Ständergehäuse (10) Kühlkanäle (12), die insbesondere schraubenförmig und mehrgängig um das Ständergehäuse geführt sind, für ein zweites Kühlmedium aufweist.

9. Elektromaschine nach Anspruch 8, dadurch gekennzeichnet, daß das zweite Kühlmedium eine Kühlflüssigkeit ist.

10. Elektromaschine nach einem der Ansprüche 1 bis 9, dadurch gekennzeichnet, daß ein gesonderter Wärmetauscher (33) für das erste Kühlmedium vorgesehen ist.
